# EUROPEAN PATENT SPECIFICATION

(11) **EP 2 993 364 B1**
(45) Date of publication and mention of the grant of the patent: **29.04.2020**
(21) Application number: 14183148.7
(22) Date of filing: 02.09.2014
(51) Int. Cl.: F16C 1/22, F16C 1/26

(54) **Device and method for adjusting the length of a bowden cable**
Vorrichtung und Verfahren zur Einstellung der Länge eines Bowdenzugs
Dispositif et procédé pour régler la longueur d'un câble Bowden

(43) Date of publication of application: 09.03.2016
(73) Proprietor: FICO CABLES LDA, 4470-263 Vermoim-Maia (PT)
(72) Inventor: Carneiro, Marco, 4470-263 Vermoim-Maia (PT); Ferreira, Paulo, 4470-263 Vermoim-Maia (PT); Lopes, Pedro, 4470-263 Vermoim-Maia (PT)
(74) Representative: Mader, Joachim

(56) References cited:
- JP-A- 2004 353 700
- US-A- 5 653 148
- US-A- 5 682 797
- US-A- 5 823 063
- US-A1- 2009 049 947

## Description

### 1. Technical Field

The present invention relates to a device and method for adjusting the length of a Bowden cable. In particular, it relates to a conduit length adjustment device of a Bowden cable in particular for the automotive industry that cannot be locked accidentally.

### 2. Prior Art

In the automotive industry, e.g. in automobiles, trucks, motorbikes, bikes, or the like so called Bowden cables are used as gear shift cable, clutch cable, brake cable, heating system cable, hood locking cable and for many other applications. Bowden cables are flexible cables comprising a bendable conduit that surrounds an inner steel cable in order to transmit a mechanical pulling or pushing force by movement of the inner cable relative to the outer conduit. This is done by displacing the inner cable in respect to the outer conduit.

The length of the conduit and/or the inner cable may have manufacturing tolerances. Thus, during the installation of a Bowden cable to the device to be actuated, such tolerances are compensated by adjusting the length of the conduit. To this end, Bowden cables usually comprise a telescopic conduit length adjustment device. The length of the conduit is adjusted by shortening and lengthening the adjustment device. Adjustment devices of the prior art comprise an inner and an outer tube-like body, wherein the inner body is slidably arranged within the outer body. During adjustment, the two bodies can move longitudinally to each other until the desired overall length of the adjustment device is achieved. Then, both slidable bodies are locked with respect to each other, preferably by a locking clip.

Such a locking clip can be a separate element which has the disadvantage that it may be lost during transport and manufacturing.

To prevent the locking clip from getting lost during shipping or mounting, the US 5,682,797 and the EP 0 779 441 A2 propose an arrangement of a locking clip or a corresponding lock button fixed to a main body of the adjustment device either in an open position or in a locked position. Thus, the locking clip or the lock button is connected to the adjustment device both in open and locked position. This prevents the locking clip or the lock button from getting lost during shipping.

US 5,823,063 discloses a cable assembly with an automatic adjustment feature which provides the necessary length adjustment and thus reduces assembly time.

JP 2004 353700 discloses a member for fastening a control cable. Malfunctions of the control cable are reduced in spite of its compact and simple structure of the components.

US 2009/0049947 A1 discloses an adjustment device for adjusting the allowance length of an inner cable. By using a simple mechanism, it is possible to discriminate whether the device is in the lock state or in the unlock state.

US 5,653,148 discloses a motion transmitting remote control assembly. The assembly is characterized by a spring interacting with the adjustment components to bias the components together to shorten the overall length of the first and second conduit sections.

In known adjustment devices, the locking clip or the locking button protrudes above the element on which it is mounted to. Therefore, it is possible that the locking clip is pushed to the inside of the adjusting element by an accidentally applied force. This accidentally locking may for example happen during the mounting process by pushing the locking clip by the worker or already during shipping where often a plurality of adjustment assemblies are densely packed together in one box.

Commonly, for security reasons such clips cannot be moved to the unlocked position anymore. When accidentally locked, the adjustment device cannot be adjusted anymore and becomes unusable. Thus, the complete Bowden cable cannot be used anymore and is wasted.

Therefore, the underlying problem of the present invention is to provide a conduit length adjustment device and method for adjusting the length of a Bowden cable, wherein the above mentioned unintentional locking is prevented.

### 3. Summary of the Invention

The above mentioned problem is solved by a conduit length adjustment device according claim 1, a Bowden cable according claim 7 and a method for transporting and installing a Bowden cable according claim 8.

According to one aspect of the invention, this problem is solved by a conduit length adjustment device, comprising a female body that comprises a locking clip opening, a male body movably arranged within the female body, a locking clip arranged within the locking clip opening, wherein the locking clip is movable from an open position to a locked position for locking the male body with respect to the female body, wherein the locking clip is arranged within the locking clip opening such that it cannot be moved to the locked position accidentally.

By providing a female body and a male body that is arranged moveable within the female body, the length of the conduit length adjustment device and an attached conduit of a Bowden cable can be easily adjusted. Thus manufacturing and mounting tolerances can be compensated. The conduit can be lengthened by moving the male body axially in direction out of the female body. In contrast, the conduit can be shortened by moving the male body axially in direction into the female body. When the desired length is reached the male and female bodies are interlocked with respect to each other in order to fix the axial length of the conduit length adjustment device. This preferably form fitting locking of the male body with respect to the female body is done by a movable locking clip. The locking clip is mounted within a locking clip opening provided by the female body. Preferably, the locking clip is U-shaped. It is preferably linearly movable perpendicular to the axial movement of the male body within the female body. By moving or pushing the locking clip inside, from its open position to its locked position, the male body gets locked and is therefore fixated at its current position with respect to the female body.

The locking clip is arranged within the locking clip opening in a way such that it cannot be accidentally moved to its locked position. Thus, the locking clip and the locking clip opening within the female body cooperate in such a way that an unintentional application of a force is counteracted by the locking clip and by the female body.

By arranging the locking clip in the above described way, the shipping and the mounting process of the Bowden cable to the device to be actuated is significantly simplified. For the shipping no particular requirements have to be taken care of since the clip cannot unintentionally lock. During mounting usually a user has to take care of not accidentally locking the device until the Bowden cable is correctly fixed to the device to be actuated and desired length has been adjusted. By using the conduit length adjustment device according to the invention, the user can put his complete attention to the correct mounting and length adjustment, without taking care of not accidentally applying pressure or force to the locking clip. This significantly improves the product quality of the devices which require exactly mounted Bowden cables.

Furthermore, the above described arrangement of the locking clip prevents the conduit length adjustment device of the present invention from being accidentally locked during shipping. Often, a plurality of such devices is densely packed in one common packaging. During shipping, e.g. during loading or unloading, pressure or force may accidentally be applied to the packaging and therefore also to the devices, which may lock one or more of the devices of the prior art. When locked, the devices are not usable anymore and are considered to be defective goods. The conduit length adjustment devices according to the present invention prevent the devices from being accidentally locked during shipping and therefore reduce the number of defective goods.

The conduit length adjustment device comprises a locking clip, wherein the locking clip in its locked position is located below a female body horizon. The female body horizon can be the outer shape or outer projection line of the female body. When the locking clip is located below that female body horizon when being locked, it is ensured that the locking clip does not protrude above any part of the female body but is rather located inside the outer projection line of the female body. When an unintentional force is applied towards the locking clip, this force is counteracted by the female body forming the female body horizon. Therefore, an unintended locking of the locking clip is prevented.

The locking clip in the open position does (a) only protrude above the female body horizon by a distance less than a distance that the locking clip has to be moved from the open position to the locked position or (b) does not protrude above the female body horizon. Thus the female body protects by its shape the locking clip from being unintentionally moved to the locked position. The female body counteracts unintentional forces applied in direction of the locking clip. Preferably, the locking clip has to be moved from the open position a specific distance in order to reach its locked position. A locking of the locking clip in its locked position will only be initiated when the locked position is entirely reached. Therefore, the locking clip can be moved a short distance which does not lead to an irreversible locking of the locking clip with the female body. Thus the locking clip can protrude above the female body horizon by a distance that is shorter than the distance that is necessary to latch the locking clip in its locked position. Such a protruding locking clip may be used as an optically visible or tangible indicator for a non-locked conduit length adjustment device. In a further embodiment the locking clip is at the same height or below the female body horizon to be protected. This has the advantageous effect that the positioning of the locking clip within the locking clip opening becomes more flexible and can therefore be adapted to different needs.

At least two opposite sides of the locking clip opening are located at a distance smaller than the actuation width of a human finger. Installing a Bowden cable and the corresponding adjustment of the length is commonly done by hand. This may cause that an undesired force or pressure is applied towards the locking clip, e.g. during holding or grabbing the conduit length adjustment device. To prevent the locking clip from being locked by such an undesired force or pressure of a worker's finger, the sides of the locking clip opening are located at a distance smaller than the width of a human finger. When the sides of the locking clip opening are located at a distance smaller than the common width of a finger of a worker, an undesired force or pressure can be counteracted. This has the advantageous effect that a worker or user cannot lock the conduit adjustment device accidentally during installing the Bowden cable or during adjusting its length.

The conduit length adjustment device further comprises at least one limitation means that protrudes from the female body in movement direction of the locking clip and is arranged at the edge of the locking clip opening and wherein the upper side of the at least one limitation means then defines the female body horizon. Preferably, the at least one limitation means is formed as a wall. The at least one limitation means of the female body, preferably of wall shape, provides a defined female body horizon independent from the remainder of the female body. Thus, the remainder of the female body can be shaped according the specific needs, e.g. with a smaller or larger diameter, arbitrary shape or the like. Limitation means as walls are particularly favorable in view of their optimized material consumption.

The conduit length adjustment device further comprises at least two walls as limitation means, wherein the walls are arranged on opposite sides of the locking clip opening at a distance smaller than the actuation width of a human finger. By arranging the at least two walls on opposite sides of the locking clip opening at a distance smaller than the actuation width of a human finger enables a good protection of the locking clip in a material effective way.

Preferably, the walls of the conduit length adjustment device are rounded in a transverse cross-section, wherein the shape of the walls corresponds to a transverse cross-section of an actuation face of the locking clip. By such a rounded shape injuries like cuts in the skin of the finger of a worker are avoided. Further, the outer shapes of the locking clip in open position and the female body can be adapted to each other which leads to an improved appearance. Furthermore, avoiding protruding parts also increases stability and robustness of the conduit length adjustment device, especially regarding its locking clip.

Preferably, the locking clip comprises an actuation face, wherein the actuation face comprises a recess for accommodating an actuation tool. Since the locking procedure should not be possible with a bare human finger, the locking of the locking clip should preferably be done by means of a tool. To simplify the positioning of a respective tool, the upper side of the locking clip comprises a recess. Preferably, the recess has a shape such that a tool, e.g. a screwdriver, fits exactly into the recess for accommodating an actuation tool. This recess prevents the tool from slipping off the locking clip during actuation. This prevents any damage to the conduit length adjustment device, the attached Bowden cable thereon and most important this prevents injuries of the worker.

The conduit length adjustment device further comprises a spring, biasing the male body and the female body away from each other in an axial direction and wherein the spring is mounted around the male body and axially abuts both the male body and the female body. The spring allows an automatic adjustment of the length of the conduit length adjustment device. The spring applies a defined pre-tension to the Bowden cable to be adjusted. After assembly the worker only needs to move the locking clip to the locked position.

Preferably, the locking clip is U-shaped and comprises a plurality of first tooth-like barriers at the inner side of the U-shape and wherein the male body comprises on the surface thereof a plurality of second tooth-like barriers. Preferably, each tooth-like barrier has a longitudinal cross-section of an isosceles triangle. When pushing the locking clip downwards, the first tooth-like barriers of the U-shaped locking clip are moved inside the gaps between the second tooth-like barriers of the male body and thereby form fit locking the female body and the male body with respect to each other. The longitudinal cross-section of the tooth-like barriers in form of the isosceles triangle has the advantage that axially applied forces applied from both axial directions to the conduit length adjustment device, are resisted equally, such that the conduit length adjustment device can be mounted in each direction equally well.

The conduit length adjustment device provides outer tooth-like latches that are located at the locking clip opening, and wherein the locking clip further comprises upwards directed first tooth-like latches which cooperate with the outer tooth-like latches when the locking clip is in the open position, preventing the locking clip from moving upwards out of the locking clip opening, and upwards directed second tooth-like latches which cooperate with the outer tooth-like latches when the locking clip is in the open position, for preventing the locking clip from moving to the locked position without application of a sufficient downwards directed force to the locking clip, wherein the second tooth-like latches cooperate with the outer tooth-like latches when the locking clip is in the locked position, for preventing the locking clip from moving back to the open position.

While in the open position, the upwards directed first tooth-like latches cooperate with the outer tooth-like latches to prevent the locking clip from moving upwards and getting lost. When the locking clip is pushed downwards in order to lock the male body with respect to the female body, the locking clip cannot be moved upwards again because the upwards directed second tooth-like latches snap under the outer tooth-like latches. When the locking clip is pushed down to the locked position, the outer tooth-like latches are increasingly spread by the second tooth-like latches, such that the locking clip generates a counter force to the application force. Thus the second tooth-like latches in cooperation with the outer latches prevent that the locking clip is moved to the locked position without application of a sufficient downwards directed force to the locking clip. Further, the locking clip without any force application is urged to a defined open position.

One embodiment of the present invention relates to a Bowden cable comprising a conduit length adjustment device as specified above, the Bowden cable further comprising a first conduit connected to the female body, a second conduit connected to the male body, an inner cable extended slidably through the conduits and through the conduit length adjustment device, wherein the inner cable comprises end fittings, and the conduits comprise conduit end fastening devices. Such a Bowden cable is significantly improved compared to common Bowden cables known from the prior art as it provides all the above described advantages, like a simplified mounting process and a more secured shipping without the risk of getting locked accidentally.

Yet another aspect of the present invention relates to a method for transporting and mounting a Bowden cable, the Bowden cable comprising a conduit length adjustment device, preferably a conduit length adjustment device as specified above, wherein the conduit length adjustment device comprises a female body with a locking clip opening, a locking clip adopting an open position or a locked position within the locking clip opening and having an actuation face, wherein the method comprising the steps of: (a) applying an intentional force to the actuation face of the locking clip by means of a tool in order to move the locking clip to the locked position, wherein the tool has an actuation means smaller than the actuation width of a human finger, or (b) counteracting an unintentional force directed towards the locking clip by means of the female body, such that the locking clip is prevented from being moved within the locking clip opening from the open position to the locked position.

The method simplifies transporting and mounting a Bowden cable. The method enables a conduit length adjustment device to be locked by applying an intentional force, e.g. with the actuation face of a screwdriver or similar tools. At the same time, an accidentally locking of the conduit length adjustment device is prevented by counteracting an unintentionally applied force directed towards the locking clip.

Further preferred embodiments of the invention are described in the dependent claims.

### 4. Short Description of the Drawing

In the following, preferred embodiments of the present invention are explained in detail in respect to the figures. In which shows:
- Fig. 1:: a top left angle-view of a conduit length adjustment device of a preferred embodiment of the invention;
- Fig. 2:: an exploded top right angle-view of the conduit length adjustment device of Fig. 1;
- Fig. 3:: a left view of a conduit length adjustment device of Fig. 1;
- Fig. 4A-B:: a detailed view of the locking clip inside the locking clip opening of a preferred embodiment of the invention;
- Fig. 5A-B:: a detailed view of the tooth-like latches of a preferred embodiment of the invention;
- Fig. 6A -C:: an inner view from the left of a conduit length adjustment device of Fig. 1 and an enlarged view of the locking clip opening of Fig. 4A-B being in a locked position;
- Fig. 7:: a bottom left angle-view of a conduit length adjustment device of Fig. 1; and
- Fig. 8:: a conduit length adjustment device of Fig. 1 mounted to a preferred embodiment of a Bowden cable.

### 5. Detailed Description of Preferred Embodiments

In the following preferred embodiments and variations of the present invention are described in detail in respect to the figures.

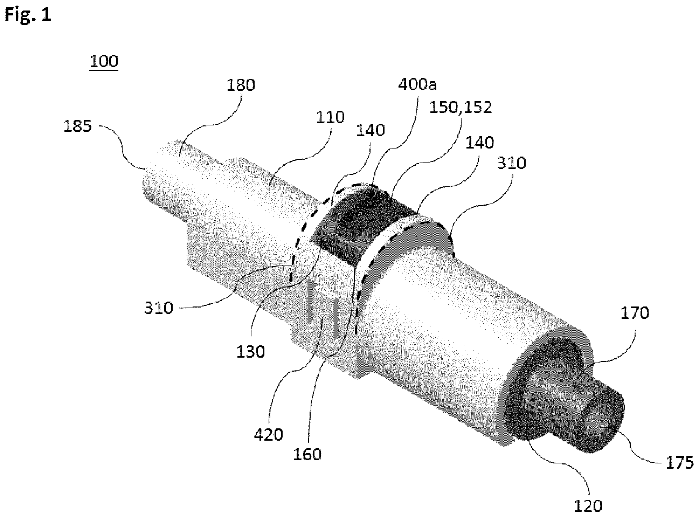

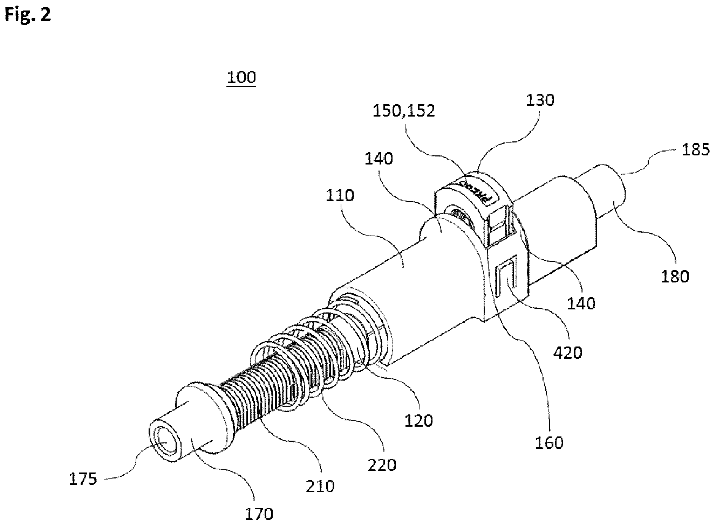

Fig. 1 to Fig. 7 show a preferred embodiment of the present invention, wherein Fig. 1 shows a conduit length adjustment device 100 in delivery state. The conduit length adjustment device comprises a female body 110, a male body 120, and a locking clip 130 that is arranged within a locking clip opening 160 of the female body 110. As it can be seen in Fig. 2 the conduit length adjustment device 100 further comprises a spring 220, preferably a helical spring, which urges the male body 120 axially away from the female body 110. Preferably, the female body 110 is generally hollow and has a bigger inner diameter than the male body 120 in order to accommodate the latter.

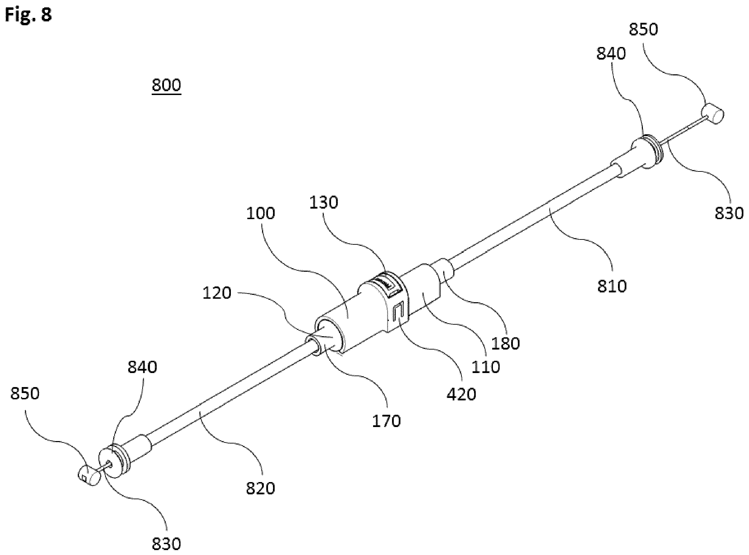

The female body 110 further comprises at one end thereof an end fitting 180 for receiving a conduit 810 of a Bowden cable 800. The female body 110 further comprises at least one limitation means 140, preferably in the form of two walls 140 around the locking clip opening 160. The male body 120 also comprises an end fitting 170 for receiving another conduit 820 of the Bowden cable 800. Both end fittings 170, 180 each comprise an opening 175, 185 through which the inner cable 830 of a Bowden cable may extend through the conduit length adjustment device 100 (see Fig. 8).

The length of the conduit length adjustment device 100 is changed or adjusted by axially moving the male body 120 towards the inside or outside the female body 110. Thus, the male body 120 is mounted slidably in respect to the female body 110, so that the length of the conduit length adjustment device 100 can be adjusted by moving the male body 120 into or towards the outside of the female body 110.

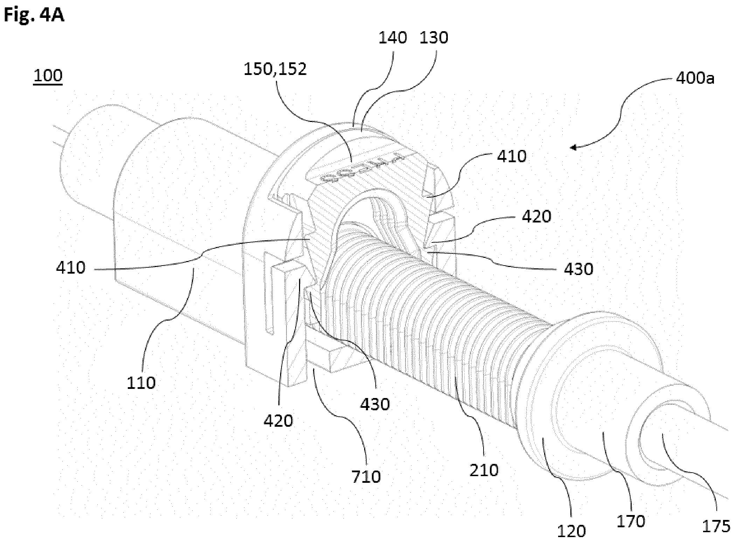

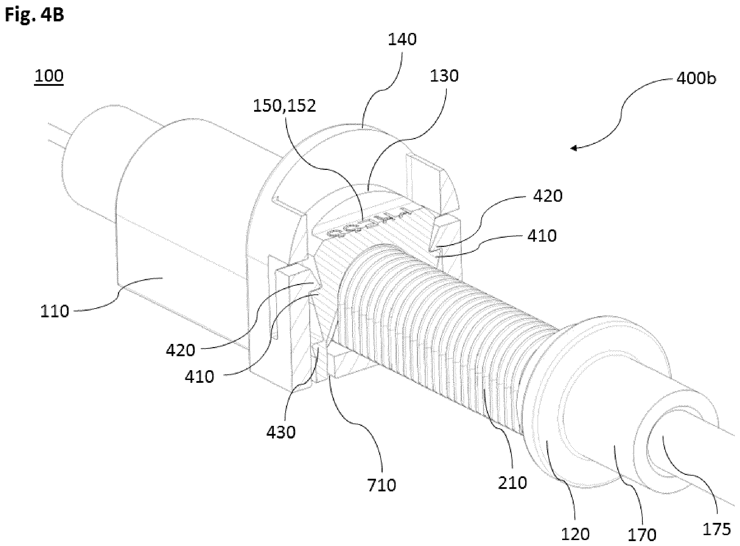

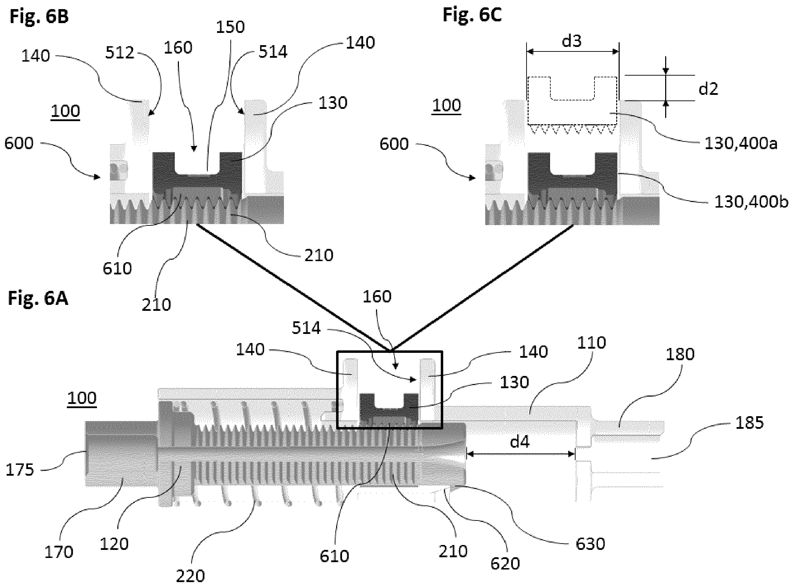

As it can be seen in Fig. 6A-C, when the desired overall length is achieved, the U-shaped locking clip 130 is linearly moved or linearly pushed inside the female body 110 within the locking clip opening 160 to the locked position 400b. Then, tooth-like barriers 210, 610 of the locking clip 130 and the male body 120 incorporate with each other and prevent both female and male bodies 110, 120 from further axially moving with respect to each other. Then the conduit length adjustment device 100 behaves like a rigid element and transmits pushing forces between the conduits 820 and 810. The plurality of tooth-like barriers 210 are arranged on an outer surface of the male body 120. As seen in Fig. 4A and 4B a U-shaped arrangement of the tooth-like barriers 210 on the surface can be used. The U-shape provides a symmetric locking force introduction into the locking clip 130 and the locking clip opening 160. The tooth-like barriers 210 interact with tooth-like barriers 610 that are located on the inner side of the locking clip 130. When interacting, the tooth-like barriers 210, 610 prevent the male body 120 from moving with respect to the female body 110. The inner shape of the locking clip 130 generally corresponds in its tooth-like barriers 610 to the shape of the tooth-like barriers 210 of the male body 120. As it can be seen in Fig. 6A-C, both tooth-like barriers 210 and 610 are preferably in the shape of an isosceles triangle. Such isosceles triangle shape enables the conduit length adjustment device 100, when locked, to resist axially applied forces in an equal manner, independent from the axially direction from where the force is applied.

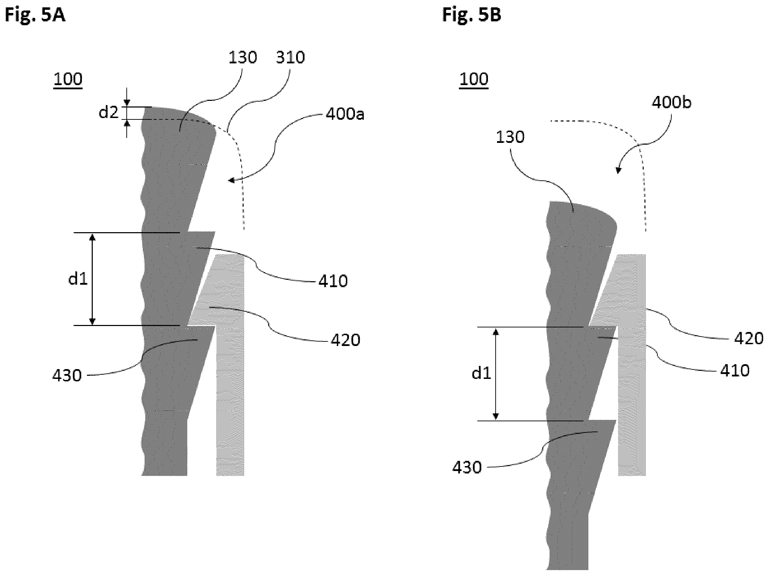

The tooth-like latches 410, 420, 430 which can be seen in Fig. 4A-B and Fig. 5A-B keep the locking clip 130 either in the open position 400a or the locked position 400b. The locking procedure will be explained in the following in more detail in respect to Fig. 4.

The limitation means 140 or the respective walls 140 near or at the edge the locking clip opening 160 prevent the locking clip 130 from accidentally being pushed or moved inside the female body 110 within the locking clip opening 160. The limitation means 140 or the respective walls 140 form a female body horizon 310, indicated by the dashed lines in Fig. 1. When a downwards directed, undesired force or an undesired pressure is applied towards the locking clip 130 of the conduit length adjustment device 100, the limitation means 140 or the respective walls 140 of the female body 110 counteract the force and therefore prevents the locking clip 130 from being pushed inside into the female body 110. Thus, elements of the female body 110 that form the female body horizon 310 prevent the conduit length adjustment device 100 from being accidentally locked.

Fig. 2 shows the assembly of the conduit length adjustment device 100 of Fig. 1 in an exploded view, wherein the parts of the device are schematically emerged in order to enhance visibility of these parts. The conduit length adjustment device 100 may comprise further parts than shown in Fig. 2, for example latches or other mounting means, O-ring seals, or the like.

The female body 110, the male body 120 and the locking clip 130 of the conduit length adjustment device 100 are preferably made of a plastic material, like PP, PE or the like. But also other rigid materials, like any kind of metal or the like are possible as materials. One advantage of a plastic material is their low weight and non-corroding properties. Preferably, the plastic parts are respectively injection-molded in one piece.

As it can be seen in Fig. 1, 2, 3 and 4 the locking clip 130 comprises a recess 150 at an actuation face 152 thereof. The actuation face 152 and particularly the recess 150 enables the application of a pushing force to the locking clip 130 such that it can be moved into the female body 110 for locking the locking clip 130 and the conduit length adjustment device 100.

The locking clip 130 is held in either the open position 400a or the locked position 400b by outer tooth-like latches 420 provided by the female body 110 which cooperate with upward directed first and second tooth-like latches 410, 430 of the locking clip 130. The latches 410, 420, 430 may have other suitable shapes that have the desired effect of keeping the locking clip in position, e.g. a tooth-shape with a straight surface or the like.

The spring 220 is arranged around the male body 120. The spring 220 biases the male body 120 and the female body 110 away from each other in an axial direction. Therefore, the spring 220 provides a predetermined biasing force onto the Bowden cable 800 which enables an automatic length adjustment. As mentioned above, this allows for a compensation of production or installation tolerances of the Bowden cable 800 including conduits 810, 820 and inner cable 830.

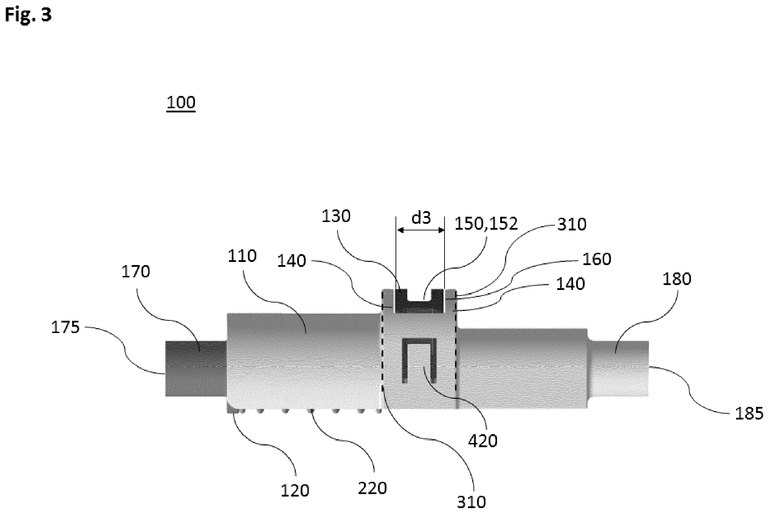

Fig. 3 shows the conduit length adjustment device 100 of Fig. 1 in a side view. The at least one limitation means 140 or the respective walls 140 are placed at opposite sides 512, 514 of the edge of the locking clip opening 160 at a distance d3. Distance d3 is smaller than the actuation width of a human finger, which for a worker may be about 10 mm to about 30 mm. Importantly, the distance is small enough that an arbitrary finger of an arbitrary worker cannot move the locking clip 130 from open 400a to locked position 400b. The distance d3 is only wide enough to push or move down the locking clip 130 with a tool, like a flat screwdriver or a similar flat tool.

The arrangement of the at least one limitation means 140 or the respective walls 140 allows a worker to hold, assemble and install the conduit length adjustment device 100 safely without the risk of accidentally locking the conduit length adjustment device 100. When the worker unintentionally applies a force or pressure to the locking clip 130, this force or pressure is counteracted by the at least one limitation means 140 or the respective walls 140 which form the female body horizon 310. In other embodiments the female body 110 comprises no particular limitation means 140 and thus directly forms the female body horizon 310.

The top view shape of the locking clip 130 is preferably rectangular. Other shapes, like circular shapes or any combination of circular and rectangular shapes are also suitable for the top view shape of the locking clip 130.

Fig. 4A-B and Fig. 5A-B show the locking clip 130 in the open position 400a (Fig. 4A and Fig. 5A) and in the locked position 400b (Fig. 4B and Fig. 5B). Referring to the open position 400a shown in Fig. 5A the locking clip comprises upwards directed first tooth-like latches 430 that interact with the outer tooth-like latches 420 that are provided inside the locking clip opening 160 of the female body 110. When in an open position 400a, the upwards directed first tooth-like latches 430 prevent the locking clip 130 to slip out of the locking clip opening 160. This is because the upwards directed first tooth-like latches 430 are latched with the outer tooth-like latches 420 located at the inner side of the locking clip opening 160. In other words, both tooth-like latches 430, 420 hook into each other. This ensures that the locking clip 130 securely remains within the locking clip opening 160 and is not lost during shipping or the like.

Furthermore, the outer tooth-like latches 420 comprise a downwards slanted surface forming the tooth-like shape to facilitate assembly. The outer tooth-like latches 420 are furthermore elastic. Therefore, when the locking clip 130 is pushed further downwards into the female body 110 through the locking clip opening 160, the outer tooth-like latches 420 are bent to the outside of the female body 110 by the upwards directed second tooth-like latches 410. When the locking clip 130 has reached its locked position 400b, the outer tooth-like latches 420 snap back into their original position over the upwards directed second tooth-like latches 410. Therefore, the outer tooth-like latches 420 form a form fitting barrier that prevents the locking clip 130 from being opened again, namely, moved back to its open position 400a.

In addition, the interaction between the upwards directed second tooth-like latches 410 and the outer tooth-like latches 420 ensures that the locking clip 130 can only be moved to its locked position 400b, when a sufficient downwards directed force or a sufficient downwards directed pressure is applied to the actuation face 152 of the locking clip 130. The interaction also ensures that the locking clip 130 maintains a defined open position 400a.

To lock the conduit length adjustment device 100 the locking clip 130 has to be pushed or moved into the locking clip opening 160 for at least a distance d1 which can be seen in Fig. 5A-B. A shorter movement (< di) of the locking clip 130 does not lock the conduit length adjustment device 100. Therefore, the locking clip 130 in open position 400a may protrude above the female body horizon 310 by a distance d2 that is less than distance d1. This still ensures that the locking clip 130 cannot be locked accidentally. When the locking clip 130 is only moved or pushed inside the locking clip opening 160 for a distance d2 or shorter, the locking will not be activated and the locking clip 130 returns to its open position 400a.

Fig. 6A shows a longitudinal cross-section view of the conduit length adjustment device 100, particularly the cross-section of the locking clip opening 160. Fig. 6B and Fig. 6C show an enlarged view of the locking clip opening 160. In Fig. 6B, the locking clip 130 is already in the locked position 400b. That means that the locking clip 130 has already been pushed or moved downwards into the female body 110 and therefore prevents the male body 120 from being moved axially with respect to the female body 110.

Fig. 6C also shows the locking clip 130 in its locked position 400b. The locking clip 130 in a possible open position 400a is indicated in dashed lines. The distance d2 indicates how far the locking clip 130 may protrude above the female body horizon 310, wherein distance d2 is smaller than distance d1. In the locked position the locking clip 130 in an axial view is located below the female body horizon 310, thus during locking movement of the locking clip 130, it sets below the "horizon" defined by the female body 110, like the sun sets behind the horizon.

The opposite sides 512, 514 define the distance d3 on which the limitation means 140 or the respective walls 140 are preferably located. Distance d3 basically defines the width of the locking clip opening 160.

Fig. 6A also shows a distance d4 which indicates how far the male body 120 can be moved within the female body 110. Distance d4 thus defines the adjustment range of the conduit length adjustment device 100. An inner barrier 620 prevents the male body 120 from moving outside the female body 110. This is because an inner abutting element 630, located at the inner end of the male body 120 is blocked by the inner barrier 620 when the male body 120 has reached its end position.

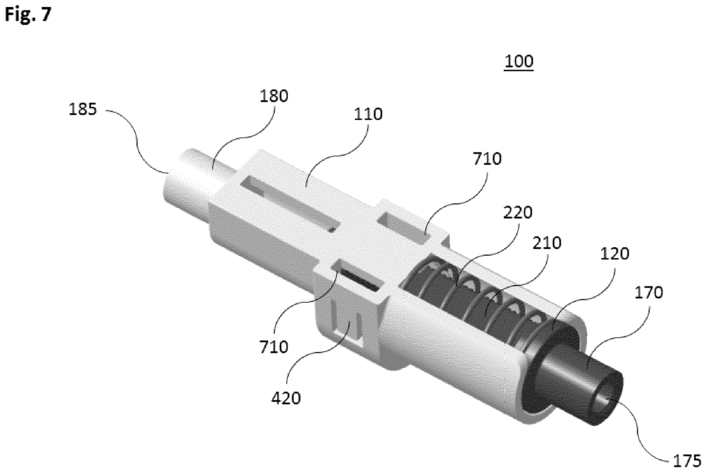

Fig. 7 shows the conduit length adjustment device 100 of Fig. 1 from the bottom side. The conduit length adjustment devise 100 further comprises bottom openings 710 that are located directly under the locking clip opening 160. Both downwards directed ends of the U-shaped locking clip 130 fit into these bottom openings 710 when the locking clip 130 is pushed to its locked position 400b. This further increases the stability of the locking clip 130 when it is in its locked position 400b. The bottom openings 710 facilitate injection molding of the outer tooth-like latches 420.

Fig. 8 shows a completely assembled Bowden cable 800 with a conduit length adjustment device 100 as described above. The Bowden cable 800 comprises a first conduit 810 connected to the conduit end fitting 180 of the female body 110 and a second conduit 820 mounted to the conduit end fitting 170 of the male body 120. The first and second conduits 810, 820 house an inner cable 830. The inner cable 830 is arranged slidably inside the first and second conduits 810, 820. The inner cable 830 is longer than the length of the first and second conduits 810, 820. End fittings 850 can be connected to the ends of the inner cable 830 for connection to an external device (not shown). The inner cable 830 preferably consists of a bendable multi filament steel cable, preferably out of stainless steel. But also other flexible materials are possible.

The first and second conduits 810, 820 have usually a composite construction of a non-compressible but bendable helical steel wire tube which may be lined with nylon, or other similar materials, and may be covered by a plastic outer sheath. End fittings 840 of the conduits 810, 820 are provided for attaching the conduits 810, 820 to external devices (not shown).

Yet another aspect of the present invention relates to a method for transporting and mounting the Bowden cable 800, the Bowden cable 800 comprising the conduit length adjustment device 100, preferably a conduit length adjustment device 100 as described above. The conduit length adjustment device 100 comprises the female body 110 with the locking clip opening 160, the locking clip 130 adopting the open position 400a or the locked position 400b within the locking clip opening 160 and having an actuation face 152, wherein the method comprises the steps of:
- applying an intentional force to the actuation face 152 of the locking clip 130 by means of a tool (not shown) in order to move the locking clip 130 to the locked position 400 b, wherein the tool has an actuation means smaller than the actuation width of a human finger, or
- counteracting an unintentional force directed towards the locking clip 130 by means of the female body 110, such that the locking clip 130 is prevented from being moved within the locking clip opening 160 from the open position 400a to the locked position 400b.

When the Bowden cable 800 is mounted to the external devices and the conduit length adjustment device 100 has adopted the desired length due to the spring 220, a worker can use a tool that is smaller than a human finger to move the locking clip 130 from the open position 400a to the locked position 400b in order to lock the conduit length adjustment device 100 in the correct length. Locking is done by applying a downwards directed, intentional force or pressure by means of the tool to the actuation face 152 of locking clip 130, in particular to the recess 150.

Furthermore, the method enables counteracting by means of the female body 110 an unintentional force directed towards the locking clip 130. This prevents the locking clip 130 from being unintentionally moved within the locking clip opening 160 from the open position 400a to the locked position 400b. Particularly, any forces applied by a finger of a worker to the locking clip 130 are counteracted by the female body 110.

The described method simplifies transporting and mounting a Bowden cable 800 that comprises a conduit length adjustment device 100 as specified above. An accidental locking during shipping and mounting of the conduit length adjustment device is prevented by counteracting an unintentionally applied force directed towards the locking clip.

### Reference Signs

- 100: conduit length adjustment device
- 110: female body
- 120: male body
- 130: locking clip
- 140: limitation means / wall
- 150: recess
- 152: actuation face
- 160: locking clip opening
- 170: end fitting of male body
- 175: end fitting opening
- 180: end fitting of female body
- 185: end fitting opening
- 210: second tooth-like barriers
- 220: spring
- d1: distance
- d2: distance
- d3: distance smaller than the actuation width of a human finger
- d4: length adjustment range
- 310: female body horizon
- 400a: open position
- 400b: locked position
- 410: upwards directed second tooth-like latch
- 420: outer tooth-like latches
- 430: upwards directed first tooth-like latch
- 512, 514: opposite sides of locking clip opening
- 610: first tooth-like barriers
- 620: inner barrier
- 630: inner abutting element
- 710: female body openings
- 800: Bowden cable
- 810, 820: first and second conduits
- 830: inner cable
- 840: conduit end fastening device
- 850: end fitting

## Claims

1. A conduit length adjustment device (100) comprising:
a. a female body (110) comprising a locking clip opening (160);
b. a male body (120), movably arranged within the female body (110);
c. a spring (220), biasing the male body (120) and the female body (110) away from each other in an axial direction;
d. a locking clip (130), arranged within the locking clip opening (160) wherein the locking clip (130) is movable from an open position (400a) to a locked position (400b) for locking the male body (120) with respect to the female body (110); **characterized in that**
e. the locking clip (130) is arranged within the locking clip opening (160) such that it cannot be moved to the locked position (400b) by accidentally applying pressure or force to the locking clip (130), wherein
f. at least two walls (140) as limitation means (140) protrude from the female body (110) in movement direction of the locking clip (130) and are arranged at the edge of the locking clip opening (160) and wherein the upper sides of the at least two walls (140) then define the outer shape or outer projection line (310) of the female body; wherein
g. the locking clip (130) in the open position (400a) does not protrude above the outer shape or outer projection line (310) of the female body; and
h. the locking clip (130) in its locked position (400b) is located below an outer shape or outer projection line (310) of the female body; and
i. wherein the walls (140) are arranged on opposite sides (512, 514) of the locking clip opening (160) at a distance (d3) smaller than the actuation width of a human finger which is 10 mm to 30 mm and only wide enough to push or move down the locking clip (130) with a flat screwdriver or a similar flat tool; and wherein
outer tooth-like latches (420) are located at the locking clip opening (160), and wherein the locking clip (130) further comprises:
j. upwards directed first tooth-like latches (430) which cooperate with the outer tooth-like latches (420) when the locking clip (130) is in the open position (400a), preventing the locking clip (130) from moving upwards out of the locking clip opening (160); and
k. upwards directed second tooth-like latches (410) which cooperate with the outer tooth-like latches (420) when the locking clip (130) is in the open position (400a), for preventing the locking clip (130) from moving to the locked position (400b) without application of a sufficient downwards directed force to the locking clip (130); wherein
l. the second tooth-like latches (410) cooperate with the outer tooth-like latches (420) when the locking clip (130) is in the locked position (400b), for preventing the locking clip (130) from moving back to the open position (400a).

2. The conduit length adjustment device (100) of claim 1, wherein the walls (140) are rounded in a transverse cross-section, wherein the shape of the walls (140) corresponds to a transverse cross-section of an actuation face (152) of the locking clip (130).

3. The conduit length adjustment device (100) of claim 1 or 2, wherein the locking clip (130) comprises an actuation face (152), wherein the actuation face (152) comprises a recess (150) for accommodating an actuation tool.

4. The conduit length adjustment device (100) of one of the claims 1 to 3 wherein the spring (220) is mounted around the male body (120) and axially abuts both the male body (120) and the female body (110).

5. The conduit length adjustment device (100) of one of the claims 1 to 4, wherein the locking clip (130) is U-shaped and comprises a plurality of first tooth-like barriers (610) at the inner side of the U-shape and wherein the male body (120) comprises on the surface thereof a plurality of second tooth-like barriers (210).

6. The conduit length adjustment device (100) of claim 5, wherein each tooth-like barrier (210, 6io) has a longitudinal cross-section of an isosceles triangle.

7. A Bowden cable (800) comprising a conduit length adjustment device (100) of one of the claims 1 to 6, the Bowden cable (800) further comprising:
a. a first conduit (810) connected to the female body (110);
b. a second conduit (820) connected to the male body (120);
c. an inner cable (830) extended slidably through the conduits (810; 820) and through the conduit length adjustment device (100); wherein
d. the inner cable (830) comprises end fittings (850); and
e. the conduits (810, 820) comprise conduit end fastening devices (840).

8. Method for transporting and mounting a Bowden cable (800), the Bowden cable (800) comprising a conduit length adjustment device (100) according to one of the claims 1 - 7, wherein the conduit length adjustment device (100) comprises a female body (110) with a locking clip opening (160), a locking clip (130), adopting an open position (400a) or a locked position (400b) within the locking clip opening (160) and having an actuation face (152), wherein the method comprises the steps of:
- applying an intentional force to the actuation face (152) of the locking clip (130) by means of a flat screwdriver or a similar flat tool in order to move the locking clip (130) to the locked position (400b); or
- counteracting an unintentional force applied by a finger of a worker directed towards the locking clip (130) by means of the female body (110), such that the locking clip (130) is prevented from being moved within the locking clip opening (160) from the open position (400a) to the locked position (400b).

## Patentansprüche

1. Hüllenlängeneinstellungsvorrichtung (100) aufweisend:
a. einen weiblichen Körper (110), aufweisend eine Verriegelungsclipöffnung (160);
b. einen männlichen Körper (120), der beweglich innerhalb des weiblichen Körpers (110) angeordnet ist;
c. eine Feder (220), die den männlichen Körper (120) und den weiblichen Körper (110) in axialer Richtung voneinander wegdrückt;
d. ein Verriegelungsclip (130), der innerhalb der Verriegelungsclipöffnung (160) angeordnet ist, wobei der Verriegelungsclip (130) von einer offenen Position (400a) zu einer verriegelten Position (400b) zur Verriegelung des männlichen Körpers (120) in Bezug auf den weiblichen Körper (110) bewegbar ist, **dadurch gekennzeichnet, dass**
e. der Verriegelungsclip (130) innerhalb der Verriegelungsclipöffnung (160) so angeordnet ist, dass er nicht durch ein unbeabsichtigtes Aufbringen eines Drucks oder einer Kraft auf den Verriegelungsclip (130) zur verriegelten Position (400b) bewegt werden kann, wobei
f. zumindest zwei Wände (140) als Begrenzungsmittel (140) von dem weiblichen Körper (110) in Bewegungsrichtung des Verriegelungsclips (130) hervorstehen und an der Kante der Befestigungsclipöffnung (160) angeordnet sind, und wobei die Oberseiten der zumindest zwei Wände (140) dann die äußere Form oder äußere Projektionsline (310) des weiblichen Körpers bilden; wobei
g. der Verriegelungsclip (130) in der offenen Position (400a) nicht über die äußere Form oder die äußere Projektionslinie (310) des weiblichen Körpers hervorsteht; und
h. der Verriegelungsclip (130) in seiner verriegelten Position (400b) unterhalb einer äußeren Form oder äußeren Projektionsline (310) des weiblichen Körpers angeordnet ist; und
i. wobei die Wände (140) an gegenüberliegenden Seiten (512, 514) der Verriegelungsclipöffnung (160) mit einem Abstand (d3) angeordnet sind, der kleiner ist, als die Betätigungsbreite eines menschlichen Fingers, welche 10 mm bis 30 mm beträgt, und der nur breit genug ist, um den Verriegelungsclip (130) mit einem flachen Schraubendreher oder einem ähnlichen flachen Werkzeug herunterzudrücken oder nach unten zu bewegen; und wobei
äußere zahnartige Verriegelungen (420) an der Verriegelungsclipöffnung (160) angeordnet sind, und wobei der Verriegelungsclip (130) weiterhin aufweist:
j. nach oben gerichtete erste zahnartige Verriegelungen (430), die mit den äußeren zahnartigen Verriegelungen (420) zusammenwirken, wenn sich der Verriegelungsclip (130) in der offenen Position (400a) befindet, und die verhindern, dass sich der Verriegelungsclip (130) nach oben aus der Verriegelungsclipöffnung (160) heraus bewegt; und
k. nach oben gerichtete zweite zahnartige Verriegelungen (410), die mit den äußeren zahnartigen Verriegelungen (420) zusammenwirken, wenn sich der Verriegelungsclip (130) in der offenen Position (400a) befindet, um zu verhindern, dass sich der Verriegelungsclip (130) zur verriegelten Position bewegt, ohne dass eine ausreichende, nach unten gerichtete Kraft auch den Verriegelungsclip (130) aufgebracht wird; wobei
1. die zweiten zahnartigen Verriegelungen (410) mit den äußeren zahnartigen Verriegelungen (420) zusammenwirken, wenn sich der Verriegelungsclip (130) in der verriegelten Position (400b) befindet, um zu verhindern, dass sich der Verriegelungsclip (130) in die offene Position (400a) zurückbewegt.

2. Hüllenlängeneinstellungsvorrichtung (100) gemäß Anspruch 1, wobei die Wände (140) in einem transversalen Querschnitt abgerundet sind, wobei die Form der Wände (140) einem transversalen Querschnitt einer Betätigungsfläche (152) des Verriegelungsclips (130) entspricht.

3. Hüllenlängeneinstellungsvorrichtung (100) gemäß Anspruch 1 oder 2, wobei der Verriegelungsclip (130) eine Betätigungsfläche (152) aufweist, wobei die Betätigungsfläche (152) eine Vertiefung (150) zur Aufnahme eines Betätigungswerkzeugs aufweist.

4. Hüllenlängeneinstellungsvorrichtung (100) gemäß einem der Ansprüche 1 bis 3, wobei die Feder (220) um den männlichen Körper (120) herum angeordnet ist und axial sowohl an dem männlichen Körper (120) als auch an dem weiblichen Körper (110) ansteht.

5. Hüllenlängeneinstellungsvorrichtung (100) gemäß einem der Ansprüche 1 bis 4, wobei der Verriegelungsclip (130) U-förmig ausgebildet ist und eine Mehrzahl von ersten zahnartigen Barrieren (610) an der Innenseite der U-Form aufweist, und wobei der männliche Körper (120) an seiner Oberfläche eine Mehrzahl von zweiten zahnartigen Barrieren (210) aufweist.

6. Hüllenlängeneinstellungsvorrichtung (100) gemäß Anspruch 5, wobei jede zahnartige Barriere (210, 610) einen longitudinalen Querschnitt in Form eines gleichschenkligen Dreiecks aufweist.

7. Bowdenzug (800) aufweisend eine Hüllenlängeneinstellungsvorrichtung (100) gemäß einem der Ansprüche 1 bis 6, wobei der Bowdenzug (800) weiterhin aufweist:
a. eine erste Hülle (810), die mit dem weiblichen Körper (110) verbunden ist;
b. eine zweite Hülle (820), die mit dem männlichen Körper (120) verbunden ist;
c. ein inneres Kabel (830), das sich gleitend durch die Hüllen (810; 820) und die Hüllenlängeneinstellungsvorrichtung (100) erstreckt; wobei
d. das innere Kabel (830) Endfittinge (850) aufweist; und
e. die Hüllen (810, 820) Endbefestigungsvorrichtungen (840) aufweisen.

8. Verfahren zum Transportieren und Montieren eines Bowdenzugs (800), wobei der Bowdenzug (800) eine Hüllenlängeneinstellungsvorrichtung (100) gemäß einem der Ansprüche 1-7 aufweist, wobei Hüllenlängeneinstellungsvorrichtung (100) einen weiblichen Körper (110) mit einer Verriegelungsclipöffnung (160) aufweist, einen Verrieglungsclip (130), der eine offene Position (400a) oder eine verriegelte Position (400b) innerhalb der Verriegelungsclipöffnung (160) annehmen kann, und eine Betätigungsfläche (152) aufweist, wobei das Verfahren die Schritte aufweist:
- Aufbringen einer beabsichtigten Kraft auf die Betätigungsfläche (152) des Verriegelungsclips (130) mittels eines flachen Schraubendrehers oder eines ähnlichen flachen Werkzeugs, um den Verriegelungsclip (130) in die verriegelte Position (400b) zu bewegen; oder
- Entgegenwirken einer unbeabsichtigten Kraft, die durch einen Finger eines Werkers gegen den Verriegelungsclip (130) gerichtet ist, mittels des weiblichen Körpers (110), so dass verhindert wird, dass der Verriegelungsclip (130) innerhalb der Verriegelungsclipöffnung (160) von der offenen Position (400a) zu der verriegelten Position (400b) bewegt wird.

## Revendications

1. Un dispositif d'ajustement de longueur de gaine (100), comprenant :
a. un corps femelle (110) comprenant une ouverture pour agrafe de verrouillage (160) ;
b. un corps mâle (120), agencé mobile à l'intérieur du corps femelle (110) ;
c. un ressort (220), sollicitant le corps mâle et le corps femelle (110) en éloignement l'un de l'autre dans une direction axiale ;
d. une agrafe de verrouillage (130), agencée à l'intérieur de l'ouverture d'agrafe de verrouillage (160), l'agrafe de verrouillage (130) étant mobile d'une position ouverte (400a) à une position verrouillée (400b) pour verrouiller le corps mâle (120) par rapport au corps femelle (110) ; **caractérisé en ce que**
e. l'agrafe de verrouillage (130) est agencée à l'intérieur de l'ouverture d'agrafe de verrouillage (160) de manière qu'elle ne puisse pas être déplacée vers la position verrouillée (400b) par application inopinée d'une pression ou d'une force sur l'agrafe de verrouillage (130), dans lequel
f. au moins deux parois (140) formant moyens de limitation (140) font saillie du corps femelle (110) dans une direction de déplacement de l'agrafe de verrouillage (130) et sont agencées sur le bord de l'ouverture d'agrafe de verrouillage (160), et dans lequel les côtés supérieurs des au moins deux parois (140) définissent alors la forme externe ou une ligne de projection externe (310) du corps femelle ; dans lequel
g. dans la position ouverte (400b) l'agrafe de verrouillage (130) ne fait pas saillie au-dessus de la forme externe ou de la ligne de projection externe (310) du corps femelle ; et
h. dans sa position verrouillée (400b) l'agrafe de verrouillage (130) est située au-dessous d'une forme externe ou d'une ligne de protection externe (310) du corps femelle ; et
i. dans lequel les parois (140) sont agencées sur des côtés opposés (512, 514) de l'ouverture d'agrafe de verrouillage (160) à une distance (d3) inférieure à la largeur d'actionnement d'un doigt humain qui est de 10 mm à 30 mm, et qui n'est suffisamment large que pour permettre d'appuyer sur l'agrafe de verrouillage (130) ou de l'abaisser avec un tournevis plat ou un outil plat semblable ; et dans lequel
des verrous externes en forme de dents (420) sont situés sur l'ouverture d'agrafe de verrouillage (160), et dans lequel l'agrafe de verrouillage (130) comprend en outre :
j. des premiers verrous en forme de dents dirigés vers le haut (430) qui coopèrent avec les verrous externes en forme de dents (420) lorsque l'agrafe de verrouillage (130) est dans la position ouverte (400a), empêchant l'agrafe de verrouillage (130) de se déplacer vers le haut hors de l'ouverture d'agrafe de verrouillage (160) ; et
k. des seconds verrous en forme de dents tournés vers le haut (410) qui coopèrent avec les verrous externes en forme de dents (420) lorsque l'agrafe de verrouillage (130) est dans la position ouverte (400a), pour empêcher l'agrafe de verrouillage (130) de se déplacer vers la position verrouillée (400b) sans qu'une force suffisante dirigée vers le bas ne soit appliquée à l'agrafe de verrouillage (130) ; dans lequel
1. les seconds verrous en forme de dents (410) coopèrent avec les verrous externes en forme de dents (420) lorsque l'agrafe de verrouillage (130) est dans la position verrouillée (400b), pour empêcher que l'agrafe de verrouillage (130) ne retourne à la position ouverte (400a).

2. Le dispositif d'ajustement de longueur de gaine (100) de la revendication 1, dans lequel les parois (140) sont arrondies en section droite transversale, la forme des parois (140) correspondant à une section droite transversale d'une face d'actionnement (152) de l'agrafe de verrouillage (130).

3. Le dispositif d'ajustement de longueur de gaine (100) de la revendication 1 ou 2, dans lequel l'agrafe de verrouillage (130) comprend une face d'actionnement (152), la face d'actionnement (152) comprenant un creux (150) pouvant recevoir un outil d'actionnement.

4. Le dispositif d'ajustement de longueur de gaine (100) de l'une des revendications 1 à 3, dans lequel le ressort (220) est monté autour du corps mâle (120) et vient toucher axialement à la fois le corps mâle (120) et le corps femelle (110).

5. Le dispositif d'ajustement de longueur de gaine (100) de l'une des revendications 1 à 4, dans lequel l'agrafe de verrouillage (130) a la forme d'un U et comprend une pluralité de premières barrières en forme de dents (610) du côté interne de la forme en U, et dans lequel le corps mâle (120) comprend sur sa surface une pluralité de secondes barrières en forme de dents (210).

6. Le dispositif d'ajustement de longueur de gaine (100) de la revendication 5, dans lequel chaque barrière en forme de dent (210, 610) a une section droite longitudinale en triangle isocèle.

7. Un câble Bowden (800) comprenant un dispositif d'ajustement de longueur de gaine (100) selon l'une des revendications 1 à 6, le câble Bowden (800) comprenant en outre :
a. une première gaine (810) montée sur le corps femelle (110) ;
b. une seconde gaine (820) montée sur le corps mâle (120) ;
c. un câble interne (830) s'étendant à coulissement au travers les gaines (810 ; 820) et au travers du dispositif d'ajustement de longueur de gaine (100) ; dans lequel
d. le câble interne (830) comprend des raccords d'extrémité (850) ; et
e. les gaines (810 ; 820) comprennent des dispositifs de fixation d'extrémité de gaine (840).

8. Procédé de transport et de montage d'un câble Bowden (800), le câble Bowden (800) comprenant un dispositif d'ajustement de longueur de gaine (100) selon l'une des revendications 1 à 6, dans lequel le dispositif d'ajustement de longueur de gaine (100) comprend un corps femelle (110) avec une ouverture d'agrafe de verrouillage (160), une agrafe de verrouillage (130) adoptant une position ouverte (400a) ou une position verrouillée (400b) à l'intérieur de l'ouverture d'agrafe de verrouillage (160) et possédant une face d'actionnement (152), le procédé comprenant les étapes consistant à :
- appliquer une force intentionnelle à la face d'actionnement (152) de l'agrafe de verrouillage (130) au moyen d'un tournevis plat ou d'un outil plat semblable afin de déplacer l'agrafe de verrouillage (130) vers la position verrouillée (400b) ; ou
- contrebalancer une force appliquée inopinément par un doigt d'un ouvrier dans la direction de l'agrafe de verrouillage (130) au moyen du corps femelle (110), de telle sorte que l'agrafe de verrouillage (130) soit empêchée de se déplacer de la position ouverte (400a) à la position verrouillée (400b) à l'intérieur de l'ouverture d'agrafe de verrouillage (160).
